# EUROPÄISCHE PATENTSCHRIFT

(11) **EP 2 256 430 B1**
(45) Veröffentlichungstag und Bekanntmachung des Hinweises auf die Patenterteilung: **21.11.2012**
(21) Anmeldenummer: 09006779.4
(22) Anmeldetag: 20.05.2009
(51) Int. Cl.: F24J 2/10, F24J 2/24, H01L 31/058

(54) **Verwertung und Aussendung von Energiewellen**
Assessing and transmitting energy waves
Utilisation et émission d'ondes d'énergie

(43) Veröffentlichungstag der Anmeldung: 01.12.2010
(73) Patentinhaber: Müllers, Horst, 53639 Königswinter (DE)
(72) Erfinder: Müllers, Horst, 53639 Königswinter (DE)
(74) Vertreter: Maiwald Patentanwalts GmbH

(56) Entgegenhaltungen:
- WO-A1-02/055943
- GB-A- 512 319
- US-A- 4 211 212
- US-A- 4 291 679
- US-A- 4 587 951

## Beschreibung

Die vorliegende Erfindung bezieht sich auf die Verwertung und Aussendung von Energiewellen, wie z.B. elektromagnetische Strahlung, wie beispielsweise Sonnenenergie, Schall oder dergleichen.

Große Anstrengungen werden heutzutage unternommen, um nutzbare Energie ressourcen- und umweltschonend aus der Natur zu gewinnen, wie z.B. aus der Sonnenenergie, Wind, Gezeiten oder dergleichen. Allerdings ist die Einsatzfähigkeit dieser Lösungsansätze meist begrenzt, da die Anlagen zur Aussetzung der jeweiligen Energieform kompliziert, wartungsintensiv oder zu voluminös sind. Andere Anlagen, wie z.B. Flach-Sonnenkollektoren, sind zwar kompakt und einfach aufgebaut, aber ihre Energieausbeute ist nicht optimal, da bedingt durch die Sonnenstandsänderung der Sonne die effektive Fläche, d.h. die Projektion der Kollektorfläche in die Sonneneinfallsrichtung, je nach Tageszeit, Weltregion, Klimazone und Jahreszeit ungünstig sein kann. Es existieren deshalb Lösungsansätze, wonach Sonnenkollektoren - aber auch Photovoltaikmodule - durch Aktoren dem Sonnenstand so nachgeführt werden, dass ihre Flächen der Sonne stets zugewandt sind. Nachteilhaft an letzteren Lösungen ist aber wiederum der erhöhte Aufwand im Hinblick auf die notwendige Energie zur Ansteuerung der Aktoren und Steuerung der Nachführung, und die Notwendigkeit zur Wartung aufgrund der mechanisch beweglichen Verschleißlosteile.

Auf ähnliche Weise existieren manchmal Probleme, Energiewellen in unterschiedliche Raumrichtungen auszustrahlen. Lösungen zur Ausstrahlung von Energie sehen manchmal das Drehen von Kollektoren vor, um die Energie einer Energiequelle zyklisch in unterschiedliche Richtungen auszusenden.

US 4,291,679 beschreibt einen Solarkollektor mit einer reflektierenden, hyperbolischparabolische Oberfläche.

US 4,587,951 beschreibt einen Solarkonzentrator mit gebogenen Reflektoroberflächen.

Die Aufgabe der vorliegenden Erfindung besteht deshalb darin, ein Konzept zur Verwertung von aus unterschiedlichen Richtungen auftreffenden Energiequellen sowie ein Konzept zur Aussendung von Energiewellen in unterschiedliche Richtungen zu schaffen, so dass die Verwertung bzw. Aussendung nachhaltig effektiver, verschleißloser und/oder unaufwendiger ist.

Diese Aufgabe wird durch eine Vorrichtung gemäß Anspruch 1 gelöst.

Die Erkenntnis der vorliegenden Erfindung besteht darin, dass es die Verwendung einer antiklastischen Reflexionsfläche ermöglicht, eine Einrichtung zur Verwertung von Energiewellen bzw. eine Einrichtung zur Aussendung von Energiewellen so zu platzieren, dass Energiewellen aus einem großen Raumwinkelbereich durch die Reflexionsfläche auf die Verwertungswirkfläche gebündelt werden bzw. von der Aussendeeinrichtung durch die Reflexionsfläche in einen großen Raumwinkelbereich ausgesendet werden können. Eine mechanische Bewegung der Reflexionsfläche, wie z.B. um dieselbe dem Sonnenstand nachzuführen, ist nicht notwendig, wodurch der Aufwand an Energie, Verschleiß, Bedienung, Wartung und mechanischen Bauteilen eingespart werden kann, wohingegen für alle möglichen Sonnenstände oder zumindest für einen großen Teil davon die Bündelung durch die Reflexionsoberfläche für eine optimale Energieausbeute sorgt. Für andere Energiewellen als Sonnenstrahlen ist die Erfindung natürlich ebenfalls einsetzbar.

Bevorzugte Ausführungsbeispiele der vorliegenden Erfindung werden nachfolgend Bezug nehmend auf die Zeichnungen erläutert. Es zeigen:
- Fig. 1: eine Raumansicht eines Sonnenkollektormoduls gemäß einem Ausführungsbeispiel der vorliegenden Erfin- dung;
- Fig. 2: eine Raumansicht eines weiteren Ausführungsbei- spiels eines Sonnenkollektormoduls;
- Fig. 3: eine Schnittansicht durch ein Sonnenkollektormodul gemäß einem weiteren Ausführungsbeispiel der vor- liegenden Erfindung entlang einer Schnittebene, die durch eine Rotationsachse der Reflexionsfläche und einem momentanen Sonnenstand läuft; und
- Fig. 4a -d: Bildansichten eines Prototyps eines Ausführungs- beispiels gemäß der folgenden Erfindung.

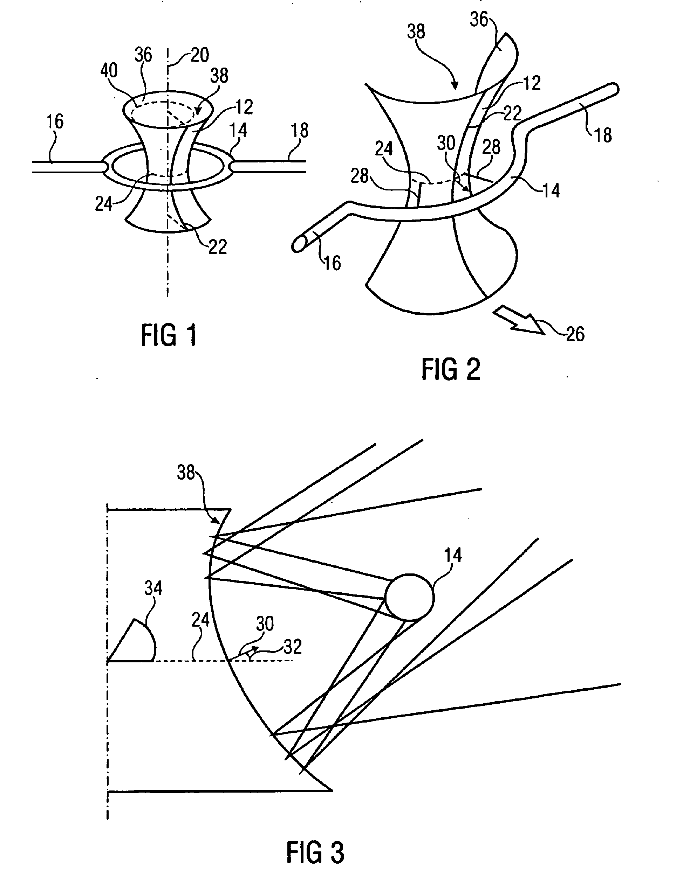

Bevor Bezug nehmend auf die nachfolgenden Figuren Ausführungsbeispiele der vorliegenden Erfindung näher erläutert werden, wird darauf hingewiesen, dass sich diese Ausführungsbeispiele lediglich exemplarisch auf die Nutzung von Sonnenenergie und insbesondere die Umsetzung von Sonnenenergie in Wärme, d.h. auf Sonnenkollektoren, beziehen. Wie es im Anschluss an die Figurenbeschreibung noch ausgeführt wird, ist die vorliegende Erfindung auch für die Verwertung von anderen Energiewellen einsetzbar und die dargestellten Ausführungsbeispiele stehen lediglich stellvertretend für all diese Möglichkeiten. Auch die Aussendung von Energiewellen ist mit Aufbauten möglich, die denjenigen aus den Figuren 1 bis 3 entsprechen, wie es ebenfalls im Folgenden dargelegt wird.

Ferner wird darauf hingewiesen, dass bei der nachfolgenden Figurenbeschreibung Elemente, die in den Figuren identisch sind oder einander entsprechen, mit gleichen Bezugszeichen versehen werden, und dass die Erläuterungen, die bezüglich eines dieser Elemente im Bezug auf eine Figur vorgenommen werden, auch im Bezug auf die anderen Figuren gelten sollen, um eine wiederholte Beschreibung zu vermeiden.

Fig. 1 zeigt ein Sonnenkollektormodul mit einer antiklastischen Reflexionsfläche 12 und einem ringförmig geformten Rohr 14, an das sich fluidmäßig eine Fluidzuleitung 16 und eine Fluidableitung 18 anschließen, so dass durch Zu- und Ableitung 16, 18 ein Fluid durch das ringförmige Rohr 14 leitbar ist. Das Rohr 14 kann beispielsweise aus hitzebeständigem Glas gebildet sein, in dem wiederum unter Vakuum ein Metallrohr oder ein mit Metallbeschichtung versehenes Rohr angeordnet ist, das von einem Wärmeabtransportfluid, wie z.B. Öl, durchströmt wird. Ein solches metallinnwandiges Fluidleitungsrundrohr wird beispielsweise von der Firma Schott hergestellt, wofür der Europäische Zukunftspreis 2009 verliehen wurde.

Die Reflexionsfläche 12 ist in dem exemplarischen Beispiel von Fig. 1 rotationssymmetrisch zu einer Rotationsachse. Insbesondere entsteht die Reflexionsfläche 12 durch Rotation einer konkaven, nach innen in Richtung der Rotationsachse 20 gewölbten Kurve 22, die beispielsweise einem Ausschnitt einer Ellipse, einer Parabel oder einer Hyperbel entsprechen kann, wobei aber weder die Formen der Kurve 22 noch die Form der Reflexionsfläche 12 hierauf begrenzt sind, wie es im Folgenden noch erörtert werden wird.

Die Reflexionsfläche 12 ist beispielsweise eine entsprechend verspiegelte Oberfläche eines hohlen Rotationskörpers oder eines massiven Rotationskörpers. Ferner wäre es möglich, dass der Rotationskörper 12 keine Verspiegelung aufweist, sondern aus an sich spiegelndem Material direkt geformt ist, wie z.B. aus Metall, Kunststoff oder anderem glatten Material. Die Reflexionsfläche 12 ist dazu vorgesehen, im Einsatz lotrecht aufgestellt zu werden, d.h. mit der Rotationsachse 20 in vertikaler Richtung. Alternativ wäre es möglich, dass die Reflexionsfläche 12 im Einsatz etwas, wie z.B. um 30°, verkippt zur Vertikalen aufgestellt wird, wie z.B. in der Ebene, durch den Nordpol, den Südpol und den Sonnenstand, an dem die Sonne in dem jeweiligen Aufstellort am höchsten steht, und zwar in Richtung weg von diesem höchsten Sonnenstand.

Auf jeden Fall ist die Reflexionsfläche 12 dazu vorgesehen, die Strahlen der Sonne auf den Ring 14 zu bündeln. Dabei ist es aufgrund der antiklastischen Form der Reflexionsfläche 12 möglich, die Bündelung so zu gestalten, dass unabhängig vom momentanen Sonnenstand die Bündelung dazu führt, dass beispielsweise zumindest 25% der Strahlen, die auf die Reflexionsfläche 12 treffen, auf das Rohr 14 reflektiert werden, wo die Sonnenstrahlen in Wärme umgesetzt werden.

Das Rohr 14 dient zur Verwertung der Sonnenenergie und setzt die auf dasselbe gebündelten Sonnenstrahlen in Wärme um, die das Rohr wiederum an ein durch dasselbe strömbares Fluid abgeben kann. Das Material des Rohres 14 ist vorzugsweise ein gut leitfähiges Material und entweder ist das Rohr 14 mit einer solchen Beschichtung versehen oder sein Material besitzt solche Eigenschaften, dass die Absorption über das Spektrum des Sonnenlichtes hinweg möglichst groß ist.

Der Ring 14 kann, wie es in Fig. 1 gezeigt ist, torusförmig ausgebildet sein, und erstreckt sich entlang und beabstandet von einer Scheitellinie 24 der Reflexionsfläche 12, wobei die Scheitellinie beispielsweise definiert sei als eine Linie, entlang der die konkave Hauptkrümmung der Reflexionsfläche 12 lokal extremal ist - quer zur Linie 24 - bzw. an der die Krümmung entlang der Kurve 22 lokal extremal ist.

Im Einsatz des Sonnenkollektormoduls von Fig. 1 wird also ein geeignetes Fluid, wie z.B. Wasser, durch die Zu- und Ableitungen 16, 18 durch das Rohr 14 geleitet, während die auf die Reflexionsfläche 12 auftreffende Sonnenstrahlung durch die Reflexionsfläche 12 auf das Rohr 14 gebündelt wird, wo die Sonnenenergie in Wärme (respektive qua Eisschrankprinzip per Wärmetauscher in Kühlung) umgesetzt wird, die wiederum das durchströmende Fluid erwärmt, wobei letzteres dann beispielsweise zum Heizen von Räumen oder sogar direkt als Warmwasser im Haushalt verwendet werden kann.

In Fig. 1 ist exemplarisch sowohl die Reflexionsfläche 12 als auch das Rohr 14 in horizontaler Richtung vollständig umlaufend gebildet. Sowohl für die Reflexionsfläche 12 als auch für den Ring 14 ist es allerdings auch möglich, dass dieselben nicht vollständig umlaufend gebildet sind. Für beide gilt, dass dieselben auch lediglich ein azimutales Segment bzw. einen azimutalen Abschnitt umfassen können. Der Ring 14 kann beispielsweise lediglich einen gebogenen Rohrabschnitt zwischen Zu- und Ableitung 16, 18 in demjenigen Teil der Reflexionsfläche 12, der den auftretenden Sonnenständen an dem Aufstellort zugewandt ist, umfassen. Zusätzlich oder alternativ kann die Reflexionsfläche 12 lediglich denjenigen Teil umfassen, der den auftretenden Sonnenständen am Aufstellort zugewandt ist. Dies ist exemplarisch in Fig. 2 dargestellt, in welcher sowohl das Rohr 14 als auch die Reflexionsfläche 12 exemplarisch so dargestellt sind, dass sie lediglich einen Azimutalwinkelbereich von 180° umspannen. In Fig. 2 ist auch exemplarisch die azimutale Richtung des höchsten Sonnenstandes mit einem Pfeil 26 angezeigt. Ferner ist in Fig. 2 exemplarisch gezeigt, dass das Rohr 14 beispielsweise durch Halterungen 28 an der Reflexionsfläche 12 selbst - und dort beispielsweise am Scheitelumlauf - befestigt sein kann. Alternativ ist es natürlich aber ebenfalls möglich, dass das Rohr 14 anders an Ort und Stelle gehalten wird, wie z.B. über die Zu- und Ableitungen 16 und 18. Anstatt der zwei gezeigten Halterungen 28 können natürlich auch nur eine oder mehr als zwei Halterungen verwendet werden. Vorzugsweise werden die Halterungen lotrecht zur Krümmung des Rohres 14 in einem solchen Höhenwinkel zur Reflexionsfläche 12 gerichtet an der Reflexionsfläche 12 montiert, die beispielsweise dem mittleren Höhenwinkel der Sonne gemittelt über das Jahr am Aufstellort hinweg für die jeweilige azimutale Richtung entspricht, damit der Schattenwurf durch die Halterungen 28 möglichst gering ist.

In Fig. 2 ist auch ein Normalenvektor 30 der Reflexionsfläche 12 an der Scheitellinie 24 gezeigt, und zwar exemplarisch am Ort des Schnittpunkts der Scheitellinie 24 mit einer der Kurven 22. Gut zu erkennen ist die negative Krümmung der Reflexionsfläche 12 an diesem Ort, wobei die Krümmung beispielsweise für alle Orte oder für einen Großteil der Orte der Reflexionsfläche 12 negativ sein kann. Gemäß einem Ausführungsbeispiel befindet sich das Rohr 14 in der Normalenrichtung 30 von der Scheitellinie 24 beabstandet. Ist der Aufstellort vorher bekannt, so ist auch bekannt, welche Sonnenstandhöhenwinkel in dem jeweiligen azimutalen Winkel auftreten, und je nach dem können die Kurven 22 gebildet sein, wie es im Folgenden noch beschrieben wird.

Fig. 2 zeigt nun gegenüber Fig. 1 durch das Fehlen der Rotationsachse an, dass es möglich ist, die Reflexionsfläche 12 nicht rotationssymmetrisch auszuführen. Vielmehr kann es sein, dass die Flächennormalenvektoren 30 an der Scheitellinie, die einen jeweiligen azimutalen Winkel aufweisen, in eine Richtung mit einem solchen Höhenwinkel weisen, der einem mittleren Sonnenstand in dieser azimutalen Richtung über das Jahr gemittelt entspricht. Auf diese Weise wären die Höhenwinkel der Flächennormalenvektoren 30 für die unterschiedlichen Azimutwinkel unterschiedlich. Dementsprechend ist es auch nicht notwendig, dass, wie in Fig. 1 exemplarisch gezeigt, das Rohr 14 eben gestaltet bzw. nur in eine Richtung gekrümmt ist. Das Rohr könnte auch neben der Krümmung um die Vertikale eine Krümmung um eine horizontale Achse aufweisen. Ferner kann das Rohr 14 anders als in Fig. 2 gezeigt auch um mehr als 180° um die Reflexionsfläche 12 herum gebildet sein.

Fig. 3 zeigt exemplarisch die im Vorhergehenden Bezug nehmend auf Fig. 2 angesprochene Möglichkeit, wonach der Flächennormalenvektor 30 entlang der Scheitellinie 24 einen Höhenwinkel 32 gegenüber dem Horizont von ungleich Null aufweist, und zwar hier exemplarisch einen Höhenwinkel 32, der einem mittleren Höhenwinkel entspricht, den die Sonne in der jeweiligen Azimutrichtung, die der Schnittebene von Fig. 3 entspricht, über das Jahr gemittelt einnimmt. Fig. 3 zeigt auch verschiedene Strahlen für verschiedene dieser Sonnenhöhen und deren Bündelung auf das Rohr 14. Auf diese Weise wird beispielsweise ein Höhenwinkelbereich 34 von mehr als beispielsweise 20° zu mehr als 80% auf die Oberfläche des Rohres 14 gebündelt, wenn die Strahlen in der Schnittebene der Fig. 3 allein betrachtet werden.

Lediglich der Vollständigkeit halber wird darauf hingewiesen, dass die Fig. 3 lediglich einen Schnitt durch eine Vertikalebene eines aufgestellten Sonnenkollektormoduls zeigt, und dass gleiche Überlegungen bzw. Verhältnisse aber natürlich für die anderen Schnittebenen entlang anderer Azimutwinkel ähnlich aussehen. Auf diese Weise ist es möglich, mit dem Sonnenkollektormodul effektiv Sonnenstrahlen über ein ganzes Jahr hinweg ohne Notwendigkeit einer mechanischen Nachführung bzw. Ausrichtung durchzuführen.

Im Folgenden werden die im vorhergehenden beschriebenen Ausführungsbeispiele noch einmal in anderen Worten beschrieben, wobei ferner auch auf verschiedene alternative Ausführungsbeispiele hingewiesen wird. Die Form der Reflexionsfläche 12 von Fig. 1 kann auch als rundläufige Felgenkerbe beschrieben werden, deren Reflektionsinnenwandungen die Form einer Parabel, Hyperbel, einer nach außen offenen Ellipse oder einer rotierenden Halbkugelform annehmen kann, wie es im Vorhergehenden beschrieben worden ist, wobei natürlich auch andere Formen möglich sind.

Im vorhergehenden wurde auch nur eine Einrichtung 14, d.h. nur ein Verwertungsort pro Azimutwinkel vorgesehen. Das muss nicht sein. Die Spiegelformen können ein oder zwei Foci aufweisen, die aufgrund der Rundläufigkeit einen Ring oder zwei Ringe bilden, auf den/die entweder parallel einfallende Sonnenstrahlen gebündelt werden.

Im Vorhergehenden wurde beschrieben, dass die Sonnenenergie in Wärme umgesetzt wird. Allerdings ist es ferner möglich, eine andere Art der Verwertungseinrichtung 14 einzusetzen, wie z.B. eine Photovoltaikvorrichtung zur Umsetzung der Sonnenenergie in Photovoltaikstrom.

Ferner ist es möglich, den prinzipiellen Aufbau nach Fig. 1-3 auch dafür zu verwenden, akustische oder digitale Funk- oder Fernsehimpulse oder -Wellen in beispielsweise paralleler Weise in den Äther rundum abzustrahlen bzw. in Umkehr zu empfangen. Beim Abstrahlausführungsbeispiel wird die Verwertungseinrichtung 14 durch eine Einrichtung zur Erzeugung entsprechender Energiewellen ersetzt, so dass die Fi. 1 bis 3 eine Vorrichtung zum Aussenden von Energiewellen mit einer antiklastischen Reflexionsfläche 12 und einer Einrichtung 14 zum Erzeugen der Energiewellen mit einer Erzeugungswirkfläche zeigten, die sich entlang der Reflexionsfläche 12 aber beabstandet von derselben erstreckt, wobei die antiklastische Reflexionsfläche 12 ausgebildet ist, die erzeugten Energiewellen kollimiert rundzusenden. Das Aussenden von Energiewellen würde dann das Erzeugen von Energiewellen an der Erzeugungswirkfläche umfassen, so dass dieselben durch die antiklastische Reflexionsfläche 12 kollimiert in unterschiedliche Richtungen rundgesendet werden.

Für die Anwendung eines Solarmoduls, wie es vorhergehend Bezug nehmend auf die Figuren 1 bis 3 beschrieben wurde, kann durch den fokalen Ring ein durch ein Röhrchen 14 durchgeleitetes Wasser rasch hocherhitzt oder sogar zu Dampf erwärmt werden, wobei dies an Sonnentagen ganztägig ohne mechanische Modulverstellung möglich ist, so dass weder Materialverschleiß noch Energieaufwand durch der Sonne nachführende, stromverbrauchende Antriebs- und Steuerungselemente notwendig sind. Ein Abstand zwischen einer Scheitellinie der jeweiligen Kerbform 22 und dem zugehörigen Fokalring richtet sich danach, ob die Kerbung nahezu eiförmig in die Felge eindringt, wodurch dann der Fokalring innerhalb oder am Mittelpunkt der größten Durchschnittsfläche einer Kugelsegmenthohnung der Kerbe liegt, oder ob sie breit und stumpf wie eine Fernsehschüssel ausgefächert ist, so dass der Fokalring außerhalb der Kerbe der Felge läge, wie es in den Figuren 1 bis 3 gezeigt ist.

Ähnlich wie es in Fig. 2 gezeigt ist, ist es möglich, den bzw. die Fokalringe 14 zu fixieren, wie z.B. durch zwei oder mehr, wie z.B. drei bis fünf, in regelmäßigen Abständen zueinander in den Kerbenboden bzw. die Reflexionsfläche 12 zu befestigende, wie z.B. einzuschraubende, Stelzen, die durch hitzebeständige Halterungen, wie z.B. Keramikisolatoren, an dem jeweiligen Ring 14 gehaltert werden können.

In dem Fall der soeben erwähnten photovoltaischen Stromgewinnung kann der Fokalring 14 mit einer Rundumbeschichtung mit hitzebeständigen Silikon-Solarzellen versehen sein, wenn Fluiderhitzung und Stromgewinnung gemeinsam gewollt sind. Alternativ oder zusätzlich können auch die Innenwände 36 der Reflexionsfläche im Inneren der Felge mit Solarzellen beschichtet werden, die dann nicht so hitzebeständig sein müssen, wobei in dem Fall der Verwendung als Sonnenkollektor, die Sonnenkollektorfunktion bzw. Warmwasserbereitungsfunktion keinen Schaden nimmt, wenn Erhitzung plus Photovoltaiknutzung gemeinsam möglich ist. Derjenige hintere Teil der Felge, der vom Sonnenumlauf, d.h. von Dämmerung bis Sonnenanfang, nicht erreicht wird, wie z.B. der Teil 38, kann gegebenenfalls ausgespart werden oder für akkurate Anschlusszellen genutzt werden. In Fig. 1 ist exemplarisch ein mit Photozellen 40 versehener Rückseitenbereich angezeigt.

Es ist in dem soeben skizzierten Fall der Erzeugung von Wärme und Strom möglich, einen Teil der elektrischen Energie aus den Photozellen zu verwenden, um aus derselben beispielsweise eine Pumpe, wie z.B. eine FloJet-Pumpe, zur Umwälzung bzw. zum Durchleiten des Fluids durch das Rohr 14 zu speisen. Eine aufladbare Batterie könnte als Zwischenspeicher zur Speicherung des Voltaik-Batteriespeicherstromes verwendet werden. Ggf. könnte auch der Strom dazu verwendet werden, einer Überhitzung des Leitungsrohrs samt Fluids gegenzusteuern.

Wie ebenfalls bereits im Vorhergehenden beschrieben worden ist, ist es möglich, den Aufbau nach beispielsweise Fig. 1 nach dem höchsten Sonnenstand bzw. dem Jahresmittel des höchsten Sonnenstandes auszurichten, wie z.B. einen 30° Höhenwinkel zur Horizontalen. Aufgrund der beispielsweise Paraboloid-, Hyperboloid- bzw. Ellipsoid-Form der Kerbe ist es möglich, ein tages- oder auch nur jahreszeitliches Absenken oder Anheben des Felgenmoduls auf einem sturmgesicherten Stativ wegzulassen.

Es wäre möglich, dass nach dem Scherenprinzip eine hitzebeständige Hülse dazu verwendet wird, vom Rand der Felge her bis zur Mitte der Sonnenstrahlungseingänge die Reflexionsfläche abzudecken. Mit einer entsprechenden Einrichtung zum Bewegen dieser Hülse könnte auch unaufwändig der Betrieb des Sonnenkollektors gestoppt oder je nach Vollschließung oder Halbschließung die Sonnenenergie/Wärme- bzw. Sonnenenergie/Strom-Umsetzung gesteuert werden.

Ferner wird darauf hingewiesen, dass im Vorhergehenden auf eine Anwendung in einem Haushalt abgestellt wurde. Natürlich ist es möglich, dass Energiemodule gemäß der vorliegenden Erfindung nicht nur im Rahmen einer Privatanlage genutzt werden. In Funk- oder Relaytürmen kann die vorliegende Erfindung beispielsweise für einen Satellitenempfang, für Polizei- und/oder Seefunk, Fernseh- und Radiosendetürme oder für GPS eingesetzt werden.

Schließlich wird noch mal darauf hingewiesen, dass zwar in Fig. 1 die Scheitellinie 24 gleichzeitig den Ort der schlankesten Rundung der Felge darstellt, dass dies aber nicht notwendigerweise der Fall sein muss. Auch der gleiche Abstand der Wirkfläche der Verwertungseinrichtung 14 zur Taille oder zur Scheitellinie über die Azimutwinkel hinweg ist nicht unbedingt erforderlich. Vielmehr sollte die antiklastische Reflexionsfläche wie in Fig. 3 gezeigt eben vorteilhaft so ausgebildet sein, dass parallele Strahlen, die auf die beispielsweise halbellipsenförmig / parabolisch/ hyperbolisch geformten Reflexionsflächen auftreffen - parabolisch oder hyperbolisch je nach Einfallswinkel zur Mittelebene, d.h. der Ebene durch die Scheitellinie 24 -, auf den Fokalring 14 reflektiert werden, so dass die Energieausbeute über den gesamten Sonnenverlauf hinweg optimiert wird.

Es wird ferner darauf hingewiesen, dass, wie im Vorhergehenden erwähnt, sich die Ausführungsbeispiele ohne Weiteres auch auf andere Energiewellen übertragen lassen. Licht, Ton oder elektrische Impulse lassen sich über die Wandungen der Felge auf einen Fokalring umleiten bzw. von dort abstrahlen, so dass sie als parallele Sendungen an Empfänger rundherum gesendet werden können. Das gilt auch bei Empfängern, die winkelverschoben in der Wirkungsebene zur Parabolfelge angestrahlt werden sollen, falls sich die aus der gleichermaßen nutzbaren Hyperbelgestalt ergebenen Abstrahlungen aus dem Fokalring der Felge physikalisch genauso parallel gestalten bzw. verhalten müssen.

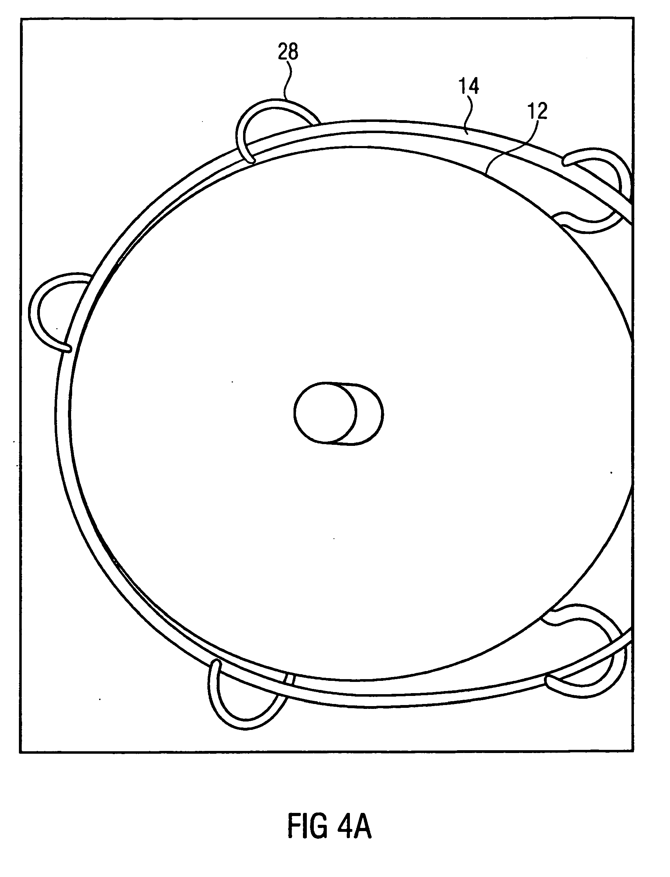

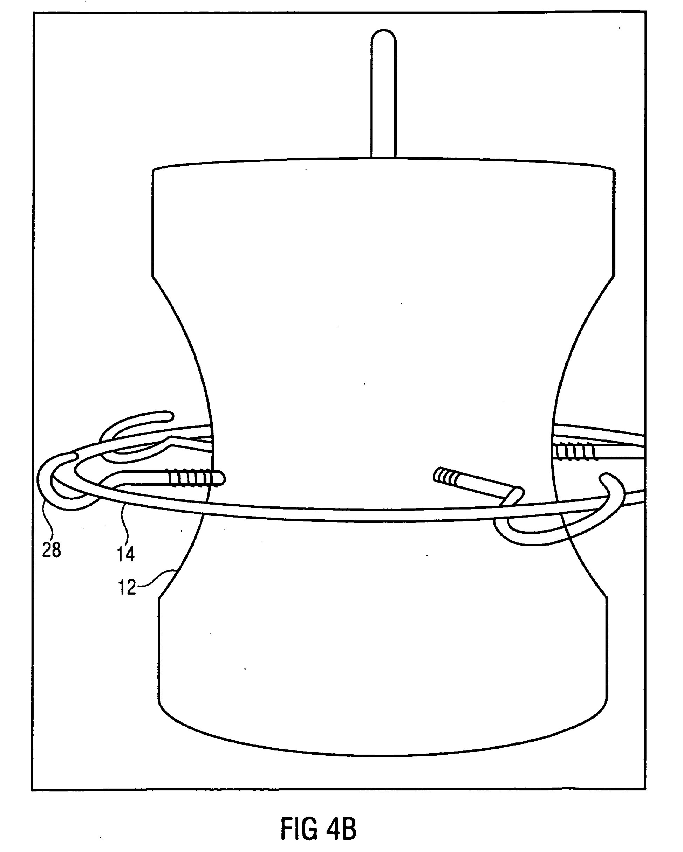

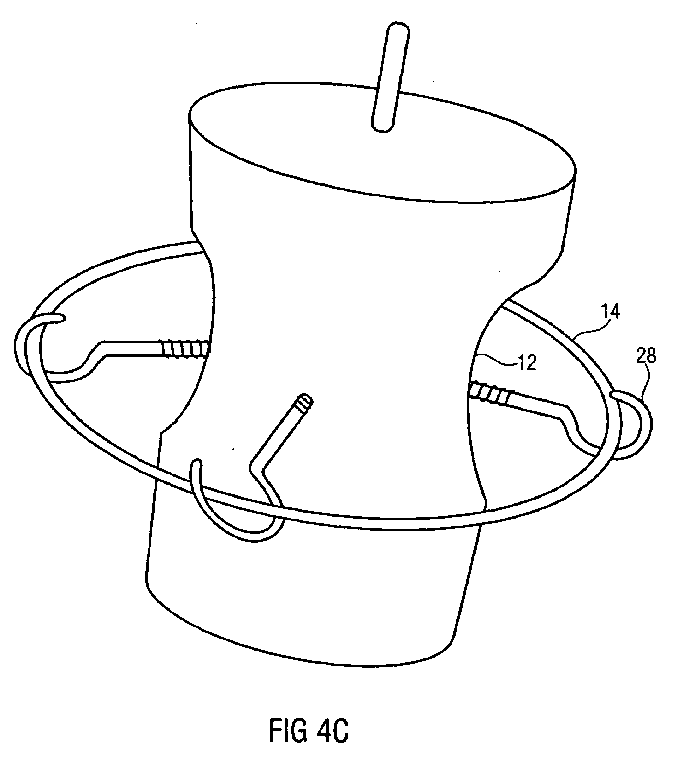

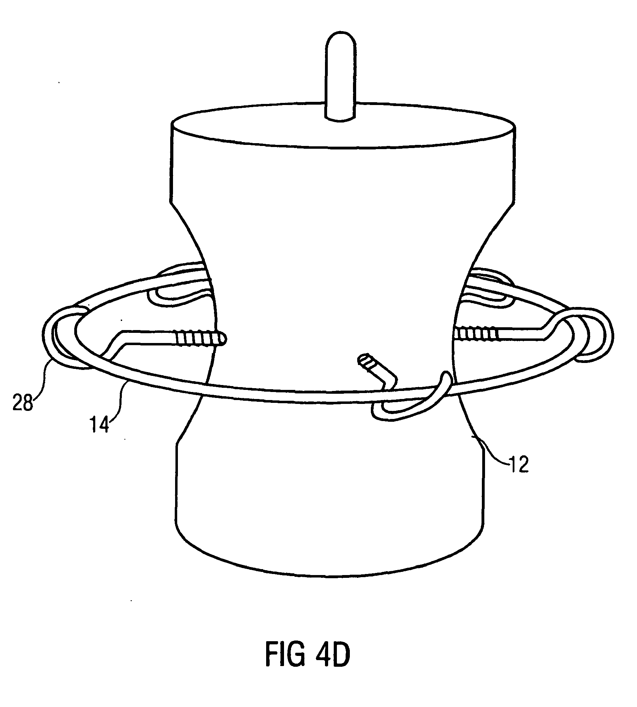

Am Ende wird noch darauf hingewiesen, dass sich u.a. auch bei niedrigen Sonnenständen aus der parabolischen Einkerbung Hyperbel-Strahlungseinfallflächen ergeben. Dabei soll unter einer hyperbolischen Einstrahlung des niederständigen Sonnenlichts die geophysikalische Besonderheit verstanden werden, dass es sich bei den vorgeschlagenen Kerben um Kegelschnitte handeln kann, wo sich paralleles Licht im vorliegenden Szenario ab einem Sonnentiefstand, der die paraboloide Scheitelebene in der Felge erreicht hat und bis zum finalen Sonnenuntergang unterschreiten mag, an der relativ aufsteigenden Auftrefffläche in der Kerbe immer noch auf den Brennring reflektiert, um Energie abzugeben. In diesen Einfallwinkeln geschieht dies mittels der optischen Verwandlung in einen Hyperboloid mit gleicher Konzentration der Einstrahlung auf den paraboloiden Brennring. Es ergibt sich also eine naturgemäße Verwandlung der Paraboloid-Bescheinung in eine optische Hyperboloid-Lichtaufnahme. Die Figuren 4a-d zeigen verschiedene Ansichten eines Prototyps einer entsprechenden Felge, die eine Spiegelfläche 12 gemäß einem Ausführungsbeispiel der vorliegenden Erfindung bildet. Zu sehen sind auch ein Ring, der als die zuvor erwähnte Verwertungseinrichtung 14 dienen kann, sowie Halterungen 28.

Das oben skizzierte Felgenprinzip besitzt den Vorteil, dass es ohne Bewegungsmechanik oder dafür sonst erforderliche Energie auskommt und unverschleißlich ist. Wenn aber geboten, lässt sich die Ausrichtung der Reflexionsfläche durch Verschiebung des fixierten Fokalrings 14 nach oben wie unten leicht anpassen.

Ferner sei noch mal Bezug genommen auf die Art bzw. der Form der Kerbe bzw. Kerblinie 22. Eine Parabelform ist möglich, wie es im Vorhergehenden bereits besprochen wurde. Allerdings kann anstatt einer Parabelform eine beidseitig offene Ellipsenform verwendet werden. Das heißt, man kann durch Ersatz einer Parabelform auch ein Ellipsenprofil 22 mit den beiden Brennpunkten jeweils unten und oben an den Rändern der Reflexionsfläche 12 anheften und bekommt dadurch eine Verdoppelung des Kollektoreffektes.

Ferner sei darauf hingewiesen, dass in dem Fall der Photovoltaiknutzung der bzw. die Fokalringe 14, die außen mit Photovoltaikelementen versehen sind, mit Kühlwasser bzw. Kühlmittel durchströmt werden, so dass an dem bzw. den Fokalringen nicht nur Strom aus Solarenergie erzeugt werden würde, sondern zusätzlich auch beispielsweise Warmbrauchwasser zu Heizzwecken oder auch zur Kühlung und für Klimaanlagen erzeugt und gleichzeitig einer Überhitzung der Photovoltaikelemente entgegenwirkt werden würde.

Die vorbeschriebenen Ellipsenbrennröhren würden gegebenenfalls eine doppelte Solar-Ausbeute relativ zu einer Parabelfelge liefern können. Auch letztere Alternative kann für Schallwellen, RTV-Frequenzempfang und -Transmission verwendet werden.

Ferner sei ergänzend noch erwähnt, dass auch eine mobile Nutzung der im Vorhergehenden beschriebenen Ausführungsbeispiele möglich ist, wie z.B. im Rahmen von Expeditionen, Camping, auf Schiffen oder sogar an Flugzeugen, Raumstationen, an Seil-, Gondel- und Eisenbahnen oder sogar an Ballons im Rahmen von beispielsweise Ballondistanzflügen. Die Außenflächen von Fesselballons könnten beispielsweise entsprechend obiger Ausführungsbeispiele umgeformt und ggf. beschichtet werden, um entsprechende Spiegelflächen zu bilden und an luftverkehrfreien Standorten zur beispielsweise Stromerzeugung in überwiegend stark bewölkten Regionen fast ohne Sonneneinstrahlung am Boden zum Einsatz zu kommen.

Im Hinblick auf die Anwendungsmöglichkeiten sei ergänzend darauf hingewiesen, dass obige Ausführungsbeispiele auch als Anlage zur Abhörung des Weltalls oder militärisch an Staatsgrenzen und im Fronteinsatz verwendet werden können. Auch eine Nutzbarkeit zur Raumprojektion in Kinos oder Freilichtkinos kommt in Frage. In letzterer Hinsicht könnte man mit einer Schallquelle als Energiequelle 14 beispielsweise runde Hör-/Konzertsäle beschallen oder die entsprechende Vorrichtung als Rundumlautsprecher auf Großveranstaltungen verwenden.

## Patentansprüche

1. Vorrichtung zur Verwertung von aus unterschiedlichen Richtungen auftreffenden Energiewellen mit einer antiklastischen Reflexionsfläche (12) und einer Einrichtung (14) zur Verwertung der Energiewellen mit einer Verwertungswirkfläche, die sich entlang der Reflexionsfläche (12) aber beabstandet von derselben erstreckt, wobei die antiklastische Reflexionsfläche ausgebildet ist, aus einem vorbestimmten Raumwinkelbereich auftreffende Energiewellen im Wesentlichen auf die Verwertungswirkfläche zu bündeln, **dadurch gekennzeichnet, dass** die Vorrichtung ein Photovoltaikmodul (40) an einer Rückseite (36) der Reflexionsfläche (12) aufweist.

2. Vorrichtung gemäß Anspruch 1, bei der die antiklastische Reflexionsfläche (12) eine gebogene Scheitellinie (24) aufweist, entlang der die konkave Hauptkrümmung der Reflexionsfläche (12) lokal extremal ist, wobei sich die Verwertungswirkfläche entlang der gebogenen Scheitellinie (24) aber beabstandet davon erstreckt, und wobei die antiklastische Reflexionsfläche (12) ausgebildet ist, Energiewellen, die aus einem Raumwinkelbereich auf die Reflexionsoberfläche auftreffen, der die Raumwinkel umfasst, in die Normalenvektoren der Reflexionsfläche (12) entlang der Scheitellinie weisen, und sich darüber hinaus erstreckt, im Wesentlichen auf die Verwertungswirkfläche zu bündeln.

3. Vorrichtung gemäß Anspruch 1 oder 2, wobei die antiklastische Reflexionsfläche (12) zumindest einen Abschnitt einer Oberfläche eines Rotationskörpers umfasst.

4. Vorrichtung gemäß einem der vorhergehenden Ansprüche, wobei die antiklastische Reflexionsfläche (12) zumindest einen Teil eines einschaligen Hyperboloids oder einen Abschnitt einer Oberfläche eines entlang seines Umfanges ellipsen-, parabel- oder hyperbelförmig eingekerbten Zylinders umfasst.

5. Vorrichtung gemäß einem der vorhergehenden Ansprüche, bei der die Einrichtung (14) zur Verwertung einen Absorber zum Umwandeln der Energiewellen in Wärme aufweist.

6. Vorrichtung gemäß Anspruch 5, wobei die Einrichtung (14) zur Verwertung einen Fluidkanal aufweist, so dass ein durch den Fluidkanal fließendes Fluid die Wärme abtransportieren kann.

7. Vorrichtung gemäß einem der vorhergehenden Ansprüche, bei der die Einrichtung (14) zur Verwertung ein Photovoltaikelement aufweist.

8. Vorrichtung gemäß einem der vorhergehenden Ansprüche, wobei die Einrichtung (14) zur Verwertung über Halterungen (28) an der Reflexionsfläche (12) befestigt ist.

9. Vorrichtung gemäß einem der vorhergehenden Ansprüche, wobei die Vorrichtung eine Solaranlage ist, bei der keine Nachführung nach dem Sonnenstand notwendig ist.

## Claims

1. A device for the utilisation of energy waves incident from different directions with an anticlastic reflection surface (12) and an arrangement (14) for the utilisation of energy waves with an active utilisation surface, which extends along the reflection surface (12) but spaced apart therefrom, wherein the anticlastic reflection surface is constituted so as to bundle energy waves incident from a predetermined solid angle region essentially onto the active utilisation surface, **characterised in that** the device comprises a photovoltaic module (40) at a rear side (36) of the reflection surface (12).

2. The device according to claim 1, wherein the anticlastic reflection surface (12) comprises a curved apex line (24), along which the concave principal curvature of the reflection surface (12) is locally extremal, wherein the active utilisation surface extends along the curved apex line (24) but spaced apart therefrom, and wherein the anticlastic reflection surface (12) is constituted so as to bundle energy waves essentially onto the active utilisation surface, said energy waves being incident on the reflection surface from a solid angle region, which comprises the solid angles into which normal vectors of the reflection surface (12) point along the apex line and extends beyond.

3. The device according to claim 1 or 2, wherein the anticlastic reflection surface (12) comprises at least a section of a surface of a body of rotation.

4. The device according to any one of the preceding claims, wherein the anticlastic reflection surface (12) comprises at least a part of a single-shell hyperboloid or a section of a surface of a cylinder notched along its periphery elliptically, parabolically or hyperbolically.

5. The device according to any one of the preceding claims, wherein the arrangement (14) for the utilisation comprises an absorber for converting the energy waves into heat.

6. The device according to claim 5, wherein the arrangement (14) for the utilisation comprises a fluid channel, so that a fluid flowing through the fluid channel can carry away the heat.

7. The device according to any one of the preceding claims, wherein the arrangement (14) for the utilisation comprises a photovoltaic element.

8. The device according to any one of the preceding claims, wherein the arrangement (14) for the utilisation is connected to the reflection surface (12) by means of supports (28).

9. The device according to any one of the preceding claims, wherein the device is a solar installation, wherein no tracking according to the position of the sun is required.

## Revendications

1. Dispositif destiné à l'utilisation d'ondes énergétiques incidentes de directions différentes, comprenant une surface réfléchissante (12) anticlastique et un dispositif (14) pour l'utilisation des ondes énergétiques avec une surface active d'utilisation, qui S'étend le long de la surface réfléchissante (12) mais à distance de cette dernière, la surface réfléchissante anticlastique étant réalisée pour concentrer essentiellement sur la surface active d'utilisation des ondes énergétiques, incidentes d'une plage angulaire prédéfinie, **caractérisé en ce que** le dispositif présente un module photovoltaïque (40) sur un côté arrière (36) de la surface réfléchissante (12).

2. Dispositif selon la revendication 1, dans lequel la surface réfléchissante anticlastique (12) présente une ligne des sommets (24) incurvée, le long de laquelle la courbure principale concave de la surface réfléchissante (12) est localement extrêmale, la surface active d'utilisation s'étendant le long de la ligne des sommets (24) incurvée mais à distance de cette dernière, et la surface réfléchissante anticlastique (12) étant réalisée pour concentrer essentiellement sur la surface active d'utilisation des ondes énergétiques, incidentes d'une plage angulaire sur la surface réfléchissante, laquelle plage comprend les angles solides dans lesquels s'orientent des vecteurs normaux de la surface réfléchissante (12) le long de la ligne des sommets, et qui s'étend au-delà.

3. Dispositif selon l'une des revendications 1 et 2, dans lequel la surface réfléchissante anticlastique (12) comprend au moins une section d'une surface d'un corps de rotation.

4. Dispositif selon l'une des revendications précédentes, dans lequel la surface réfléchissante anticlastique (12) comprend au moins une partie d'un hyperboloïde à une nappe ou une section d'une surface d'un cylindre rainuré le long de son pourtour en forme d'ellipse, de parabole ou d'hyperbole.

5. Dispositif selon l'une des revendications précédentes, dans lequel le dispositif (14) destiné à l'utilisation présente un absorbeur pour la conversion des ondes énergétiques en chaleur.

6. Dispositif selon la revendication 5, dans lequel le dispositif (14) destiné à l'utilisation présente un conduit de fluide, de sorte qu'un fluide s'écoulant au travers du conduit peut évacuer la chaleur.

7. Dispositif selon l'une des revendications précédentes, dans lequel le dispositif (14) destiné à l'utilisation présente un élément photovoltaïque.

8. Dispositif selon l'une des revendications précédentes, dans lequel le dispositif (14) destiné à l'utilisation est fixé sur la surface réfléchissante (12) par l'intermédiaire de fixations (28).

9. Dispositif selon l'une des revendications précédentes, dans lequel le dispositif est une installation solaire, dans laquelle n'est requis aucun asservissement à la hauteur du soleil.
